(19) Europäisches Patentamt
European Patent Office
Office européen des brevets

(11) **EP 2 659 284 B1**

(12) **EUROPÄISCHE PATENTSCHRIFT**

(45) Veröffentlichungstag und Bekanntmachung des Hinweises auf die Patenterteilung:
**22.03.2017  Patentblatt 2017/12**

(21) Anmeldenummer: **11793355.6**

(22) Anmeldetag: **08.11.2011**

(51) Int Cl.:
*G01S 13/34* (2006.01)       *G01S 13/44* (2006.01)
*G01S 7/41* (2006.01)         *H01Q 25/00* (2006.01)
*H01Q 3/30* (2006.01)         *G01S 13/93* (2006.01)
*H01Q 21/06* (2006.01)

(86) Internationale Anmeldenummer:
**PCT/EP2011/069591**

(87) Internationale Veröffentlichungsnummer:
**WO 2012/089385 (05.07.2012 Gazette 2012/27)**

(54) **RADARSENSOR FÜR KRAFTFAHRZEUGE**

RADAR SENSOR FOR VEHICLES

CAPTEUR RADAR POUR VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2010  DE 102010064348**

(43) Veröffentlichungstag der Anmeldung:
**06.11.2013  Patentblatt 2013/45**

(73) Patentinhaber: **Robert Bosch GmbH
70442 Stuttgart (DE)**

(72) Erfinder:
• **BINZER, Thomas
74379 Ingersheim (DE)**
• **GROSS, Volker
71254 Ditzingen (DE)**
• **HELLINGER, Raphael
75181 Pforzheim (DE)**
• **TREPTOW, Andre
71665 Vaihingen An Der Enz (DE)**

(56) Entgegenhaltungen:
EP-A2- 1 306 925        DE-A1- 10 340 835
JP-A- 2008 151 583      US-E- R E36 095

**Beschreibung**

Stand der Technik

Die Erfindung betrifft einen Radarsensor für Kraftfahrzeuge, mit einer Antennenanordnung, die mindestens zwei Gruppen von Antennenelementen aufweist, die sich in ihrer Wirkrichtung in Elevation unterscheiden und deren Hauptstrahlrichtungen in der Elevation um einen bestimmten Winkel zueinander verschwenkt sind, und die Antennenanordnung durch eine Steuereinrichtung derart ansteuerbar ist, dass sie eine zeitlich variierende Richtcharakteristik aufweist, wobei, die Steuereinrichtung dazu ausgebildet ist, die Gruppen zu aktivieren und zu deaktivieren, und mit einer Auswerteeinrichtung zur Auswertung der von der Antennenanordnung empfangenen Radarechos und zur winkelauflösenden Ortung von Objekten, welche Auswerteeinrichtung dazu ausgebildet ist, den Elevationswinkel der Objekte anhand der von den verschiedenen Gruppen empfangenen Radarechos abzuschätzen. Radarsensoren dieser Art werden zur Erfassung des Verkehrsumfelds im Rahmen von Fahrerassistenzsystemen eingesetzt, beispielsweise zur radargestützten Abstandsregelung (ACC; Adaptive Cruise Control). Ein derartiges Fahrerassistenzsystem ist beispielsweise aus der Veröffentlichung "Adaptive Fahrgeschwindigkeitsregelung ACC", Robert Bosch GmbH, Gelbe Reihe, Ausgabe 2002, Technische Unterrichtung, bekannt. Eine wichtige Messgröße des Radarsensors ist neben der Entfernung und der Relativgeschwindigkeit auch der Winkel der georteten Objekte. Hierbei ist sowohl der horizontale Winkel (Azimutwinkel) als auch der vertikale Winkel (Elevationswinkel) von Bedeutung. Der Azimutwinkel wird zur Schätzung des Querversatzes und damit zur Spurzuordnung verwendet. Der Elevationswinkel ermöglicht eine Unterscheidung zwischen Objekten, die unterfahrbar oder überfahrbar sind, und Objekten, die echte Hindernisse darstellen. So lassen sich insbesondere bei Sicherheitsanwendungen (PSS; Predictive Safety Systems) Fehlauslösungen durch metallische Gegenstände wie Kanaldeckel, Blechdosen auf der Fahrbahn und dergleichen vermeiden.

Das azimutale Winkelauflösungsvermögen wird zumeist dadurch erreicht, dass mehrere winkelversetzte Radarkeulen erzeugt werden, in denen die Radarechos in getrennten Kanälen ausgewertet werden. Es sind auch scannende Radarsysteme bekannt, bei denen die Radarkeule in horizontaler Richtung verschwenkt wird. Eine Abschätzung des Elevationswinkels ist beispielsweise durch mechanische Schwenkung des Radarsensors in der Vertikalen möglich. Aus Kostengründen wird der Elevationswinkel jedoch zumeist nur indirekt über eine zeitliche Auswertung des Rückstreuverhaltens von Objekten ermittelt.

Für den Einsatz in Radarsensoren für Kraftfahrzeuge sind sogenannte planare Antenneneinrichtungen oder Patch-Antennen besonders geeignet, da sie sich wegen ihrer flachen Bauform einfach und kostengünstig herstellen lassen, beispielsweise im Ätzverfahren. Bei einer solchen Antenneneinrichtung handelt es sich typischerweise um eine flächige Anordnung von strahlenden Resonatoren auf einem HF-Substrat, die jeweils mit einer bestimmten Amplitude und Phase belegt sind. Die Richtcharakteristik der Antennenanordnung ergibt sich dann durch Überlagerung der Strahlungsdiagramme der einzelnen Patch-Elemente.

Aus DE 102 56 524 A1 ist eine Einrichtung zur Messung von Winkelpositionen unter Verwendung von Radarpulsen und sich überlappenden Strahlcharakteristiken mindestens zweier Antennenelemente bekannt.

Ein Radarsensor nach dem Oberbegriff des Anspruchs 1 ist aus EP 1 306 925 A2 bekannt. Vergleichbare Radarsensoren werden in JP 2008 151583 A und US R E36 095 E beschrieben.

DE 103 40 835 A1 beschreibt einen Radarsensor, bei dem Phasen zur Bestimmung des Elevationswinkels, in denen ein bestimmter Elevationswinkelbereich mit einer beweglichen Radarkeule abgetastet wird, mit Phasen abwechseln, in denen durch horizontale Abtastung der Azimutwinkel des Objekts bestimmt wird.

Offenbarung der Erfindung

Aufgabe der Erfindung ist es, einen Radarsensor für Kraftfahrzeuge zu schaffen, der bei einem einfachen Aufbau eine Abschätzung des Elevationswinkels der georteten Objekte ermöglicht.

Diese Aufgabe wird erfindungsgemäß dadurch gelöst, dass die Steuereinrichtung dazu ausgebildet ist, zwei Gruppen von Antennenelementen im periodischen Wechsel zu aktivieren und zu deaktivieren, und dass die Auswerteeinrichtung dazu ausgebildet ist, für jedes geortete Objekt einen Leistungsparameter zu berechnen, der ein Maß für die Stärke des empfangenen Radarechos bildet, dass eine zu der Auswerteeinrichtung gehörende Kontrast-Berechnungseinheit dazu vorgesehen ist, aus der Leistung P1, die während einer Periode empfangen wird, in der das Radarsignal von einer Gruppe der Antennenelemente gesendet wird, und der Leistung P2, die während einer Periode empfangen wird, in der das Radarsignal von der anderen Gruppe der Antennenelemente gesendet wird, einen Kontrast K nach der Formel K = (P1 - P2) / (P1 + P2) zu berechnen, und eine Elevationswinkel-Schätzeinheit dazu ausgebildet ist, den Elevationswinkel des Objektes anhand des Kontrastes zu bestimmen.

Durch die wechselweise Aktivierung der beiden Gruppen von Antennenelementen wird die Radarkeule periodisch in der Vertikalen verschwenkt, so dass ohne Einbußen an Empfindlichkeit und Reichweite ein größerer Elevationswinkelbereich abgedeckt werden kann. Im allgemeinen wird dabei die Winkelabweichung zwischen den beiden Radarkeulen kleiner sein als die Winkelausdehnung einer einzelnen Radarkeule in der Elevation, so dass ein Objekt, das sich vor dem Fahrzeug befindet, stets im Blickfeld des Radarsensors bleibt, unabhängig davon, welche der beiden Gruppen von Antennenelementen gerade aktiv ist. Folglich lassen sich die Entwicklung des Abstands, der Relativgeschwindigkeit und des Azimutwinkels des Objektes mit hoher zeitlicher Auflösung verfolgen, und die gleichzeitige Abschätzung des Elevationswinkels (mit geringerer zeitlicher Auflösung) liefert wichtige zusätzliche Informationen über das Objekt, beispielsweise ob das Objekt überfahrbar ist oder nicht, ob es sich um einen Lkw oder Pkw handelt, und dergleichen. Auch Änderungen der Fahrbahnneigung, beispielsweise das Überfahren einer Kuppe oder das Durchfahren einer Mulde lassen sich auf diese Weise anhand der Änderung des Elevationswinkels eines vorausfahrenden Fahrzeugs erkennen.

Die Abschätzung des Elevationswinkels kann einfach durch die wechselweise Aktivierung und Deaktivierung von zwei Gruppen von Antennenelementen erreicht werden, und erfordert somit weder ein mechanisches Verschwenken des Radarsensors noch den Einsatz aufwendiger Phasenschieber-Elemente zum Verändern der Phasenbeziehungen.

Vorteilhafte Ausgestaltungen der Erfindung sind in den Unteransprüchen angegeben.

Obgleich grundsätzlich jede "Gruppe" von Antennenelementen auch aus einem einzigen Antennenelement bestehen kann, besteht jede Gruppe bevorzugt aus mehreren Antennenelementen, die an ein gemeinsames Speisenetzwerk angeschlossen sind, dessen Konfiguration die Phasenbeziehung zwischen den einzelnen Antennenelementen und damit die Richtcharakteristik der Gruppe festlegt. Wahlweise oder zusätzlich können jedoch zur Beeinflussung der Richtcharakteristik auch Linsenelemente eingesetzt werden.

In einer vorteilhaften Ausführungsform ist ein bistatisches Antennenkonzept verwirklicht, d.h., es sind getrennte Antennenelemente zum Senden des Radarsignals und zum Empfang des Radarechos vorgesehen. Beispielsweise können zum Empfang der Radarechos mehrere Antennenelemente vorgesehen sein, die in der Horizontalen relativ zur optischen Achse einer Linse versetzt sind, so dass mehrere winkelversetzte Radarkeulen erzeugt werden, die eine Bestimmung des Azimutwinkels der Objekte erlauben.

Im folgenden wird ein Ausführungsbeispiel anhand der Zeichnung näher erläutert.

Es zeigen:

Fig. 1    ein Blockdiagramm eines erfindungsgemäßen Radarsensors;

Fig. 2    eine Skizze zur Erläuterung der Funktionsweise des Radarsensors bei der Abschätzung des Elevationswinkels eines Objektes;

Fig. 3    Elevationsdiagramme für zwei Gruppen von Antennenelementen in dem Radarsensor nach Fig. 1; und

Fig. 4    eine Kontrastkurve, die eine Abschätzung des Elevationswinkels erlaubt.

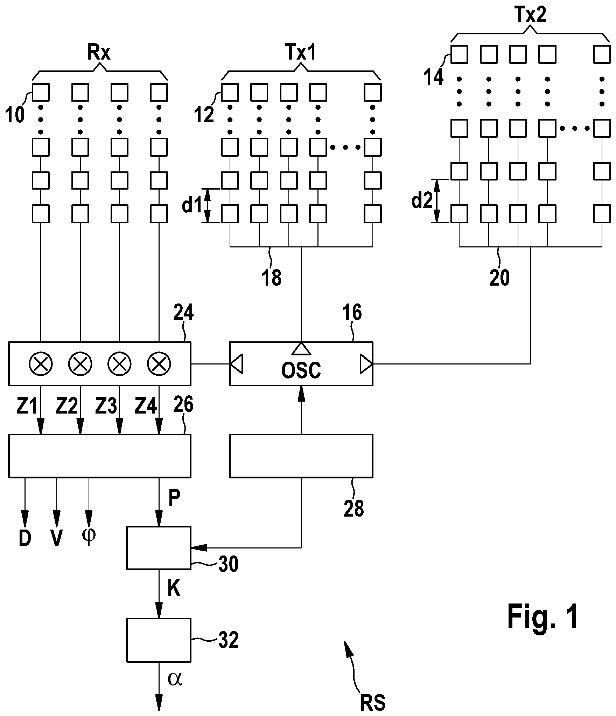

Der in Fig. 1 gezeigte Radarsensor RS weist eine Antennenordnung mit drei Gruppen Rx, Tx1, Tx2 von Antennenelementen 10, 12, 14 auf. Die Antennenelemente 12, 14 der Gruppen Tx1 und Tx2 dienen abwechselnd zum Senden eines Radarsignals, das von einem lokalen Oszillator 16 erzeugt wird. Die Antennenelemente 12 der Gruppe Tx1 sind in mehreren Spalten angeordnet, die vertikal orientiert sind und jeweils mehrere in gleichmäßigen Abständen angeordnete Antennenelemente umfassen. Über ein Speisenetzwerk 18 wird das zu sendende Radarsignal auf die einzelnen Spalten verteilt und dann innerhalb dieser Spalte seriell in die einzelnen Antennenelemente 12 eingespeist. Die Spalten weisen gleichmäßige waagerechte Abstände zueinander auf. Das Speisenetzwerk 18 ist so konfiguriert, dass sämtliche Antennenelemente 12 der Gruppe Tx1 gleichphasig angesteuert werden, so dass sich durch Überlagerung der von den einzelnen Antennenelementen emittierten Strahlung eine Bündelungswirkung sowohl im Azimut als auch in der Elevation ergibt. Die Hauptabstrahlrichtung steht dabei senkrecht auf der Ebene, in der die Antennenelemente 10, 12, 14 beispielsweise auf einem gemeinsamen Hochfrequenzsubstrat angeordnet sind. Damit die einzelnen Antennenelemente 12 einer Spalte gleichphasig angeregt werden, stimmt der Abstand d1 zwischen zwei benachbarten Antennenelementen 12 innerhalb einer Spalte mit der Wellenlänge $\lambda$ auf dem Hochfrequenzsubstrat überein (oder beträgt ein ganzzahliges Vielfaches davon).

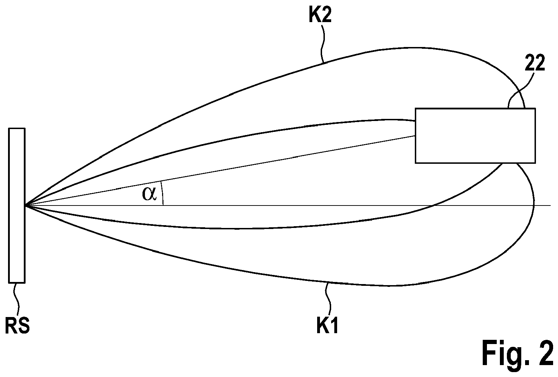

Die Konfiguration der Antennenelemente 14 in der Gruppe Tx2 ist im Prinzip die gleiche wie in der Gruppe Tx1, nur mit dem Unterschied, dass der Abstand d2 zwischen benachbarten Antennenelementen 14 innerhalb einer Spalte von der Wellenlänge $\lambda$ abweicht. Im gezeigten Beispiel ist er größer als diese Wellenlänge. Das hat zur Folge, dass die aufeinanderfolgenden Antennenelemente 14 innerhalb jeder Spalte eine bestimmte Phasenverschiebung zueinander aufweisen, so dass sich durch Überlagerung eine Radarkeule K2 ergibt (Fig. 2) deren Hauptabstrahlrichtung in der Elevation um einen bestimmten Winkel gegenüber der Hauptabstrahlrichtung der von der Gruppe Tx1 erzeugten Radarkeule K1 verschwenkt ist. Die Anzahl der Antennenelemente 14 je Spalte und die Anzahl der Spalten kann dabei die gleiche sein wie bei den Antennenelementen 12 der Gruppe Tx1, so dass die Bündelung der Radarkeule K2 in der Elevation im wesentlichen mit der Bündelung der Radarkeule K1 übereinstimmt und beide Radarkeulen auch im Azimut im wesentlichen gleich stark gebündelt sind. Weiterhin werden in der Gruppe Tx2 die einzelnen Spalten der Antennenelemente 14 über ein Speisenetzwerk 20 gleichphasig angesteuert, so dass die Hauptabstrahlrichtung der Radarkeule K2 im Azimut rechtwinklig auf dem Substrat steht.

Wenn das Radarsignal, das entweder von der Gruppe Tx1 oder der Gruppe Tx2 emittiert wird, auf ein Objekt 22 trifft (Fig. 2), beispielsweise ein vorausfahrendes Fahrzeug, so wird ein Teil der Radarstrahlung reflektiert, wobei es eine von der Relativgeschwindigkeit des Objektes abhängige Dopplerverschiebung erfährt, und das reflektierte Signal wird dann von den Antennenelementen 10 der Gruppe Rx empfangen. Die Antennenelemente 10 dieser Gruppe Rx sind in vier Spalten angeordnet und sind innerhalb jeder Spalte in Serie miteinander verbunden. Jede Spalte bildet einen Empfangskanal und ist auf einen Eingang eines Vierkanalmischers 24 geschaltet. Einem anderen Eingang dieses Vierkanalmischers 24 wird vom Oszillator 16 dasselbe Signal zugeführt, das auch an das Speisenetzwerk 18 oder 20 übermittelt wird. Das von jeder Antennenspalte empfangene Signal wird mit dem Signal des lokalen Oszillators 16 gemischt. Der Vierkanalmischer 24 liefert somit als Mischprodukte vier Zwischenfrequenzsignale Z1-Z4, deren Frequenz jeweils dem Frequenzunterschied zwischen dem empfangenen Signal und dem Signal des lokalen Oszillators 16 entspricht.

Entsprechend dem Prinzip eines FMCW-Radars (Frequency Modulated Continuous Wave) wird die Frequenz des Oszillators 16 rampenförmig moduliert (der Abstand d1 zwischen den Antennenelementen 12 entspricht daher genau genommen der mittleren Wellenlänge des gesendeten Signals). Die Frequenz des von den Antennenelementen 10 empfangenen Radarechos unterscheidet sich deshalb von dem Signal des lokalen Oszillators um einen Betrag, der einerseits von der Signallaufzeit vom Radarsensor zum Objekt und zurück und andererseits, aufgrund des Doppler-Effekts, von der Relativgeschwindigkeit des Objekts abhängig ist. Entsprechend enthalten auch die Zwischenfrequenzsignale Z1-Z4 Information über den Abstand und die Relativgeschwindigkeit des Objektes. Bei der Frequenzmodulation wechseln steigende und fallende Frequenzrampen miteinander ab, und indem man die Zwischenfrequenzsignale auf der steigenden Rampe und auf der fallenden Rampe einmal addiert und einmal subtrahiert, lassen sich die abstands- und geschwindigkeitsabhängigen Anteile voneinander trennen, so dass man Werte für den Abstand D und die Relativgeschwindigkeit V jedes georteten Objektes erhält.

Die Zwischenfrequenzsignale Z1-Z4 werden einer Auswerteeinrichtung 26 zugeführt und dort kanalweise, jeweils über die Dauer einer Frequenzrampe, aufgezeichnet und durch schnelle Fourier-Transformation in ein Spektrum zerlegt. In diesem Spektrum zeichnet sich jedes Objekt durch einen Peak bei der durch den jeweiligen Objektabstand und die Relativgeschwindigkeit bestimmten Frequenz ab.

Die von den verschiedenen Spalten der Gruppe Rx empfangenen Radarechos weisen eine vom jeweiligen Azimutwinkel φ des Objekts abhängige Phasenverschiebung zueinander auf. Aufgrund der Bündelung des von der Gruppe Tx1 oder Tx2 gesendeten Signals ist auch die Amplitude des empfangenen Radarechos vom Azimutwinkel des Objekts abhängig. Durch Vergleich der Amplituden- und Phasenunterschiede mit einem entsprechenden Antennendiagramm lässt sich daher in der Auswerteeinrichtung 26 auch der Azimutwinkel φ bestimmen.

Eine elektronische Steuereinrichtung 28 steuert nicht nur die Frequenzmodulation des Oszillators 16, sondern veranlasst den Oszillator auch, das zu sendende Signal abwechselnd an die Gruppe Tx1 und die Gruppe Tx2 auszugeben. Die aktiven und inaktiven Phasen der Gruppen Tx1 und Tx2 wechseln einander somit periodisch ab, beispielsweise mit einer Periode, die einen vollständigen Zyklus von steigenden und fallenden Frequenzrampen des Oszillators 16 entspricht. Das Signal der Steuereinrichtung 28, das die Umschaltung zwischen den Speisenetzwerken 18 und 20 bewirkt, wird auch einer Kontrast-Berechnungseinheit 30 zugeführt, die außerdem ein Signal P von der Auswerteeinrichtung 26 erhält. Das Signal P gibt für jedes geortete Objekt die Stärke (Leistung) des Radarechos an, beispielsweise gemittelt über alle vier Kanäle. In den Perioden, in denen die Gruppe Tx1 zum Senden des Radarsignals benutzt wird, erhält man so für ein gegebenes Objekt eine Leistung P1, und in den Perioden, in denen die Gruppe Tx2 zum Senden des Radarsignals benutzt wird, erhält man für dasselbe Objekt eine Leistung P2. In der Kontrast-Berechnungseinheit 30 wird nun ein Kontrast K gemäß folgender Formel berechnet:

$$K = (P1 - P2) / (P1 + P2)$$

Anhand des so berechneten Kontrastes K lässt sich dann in einer Elevationswinkel-Abschätzeinheit 32 ein Schätzwert für den Elevationswinkel α des Objekts berechnen, wie nachstehend unter Bezugnahme auf Fig. 2 bis 4 erläutert werden soll.

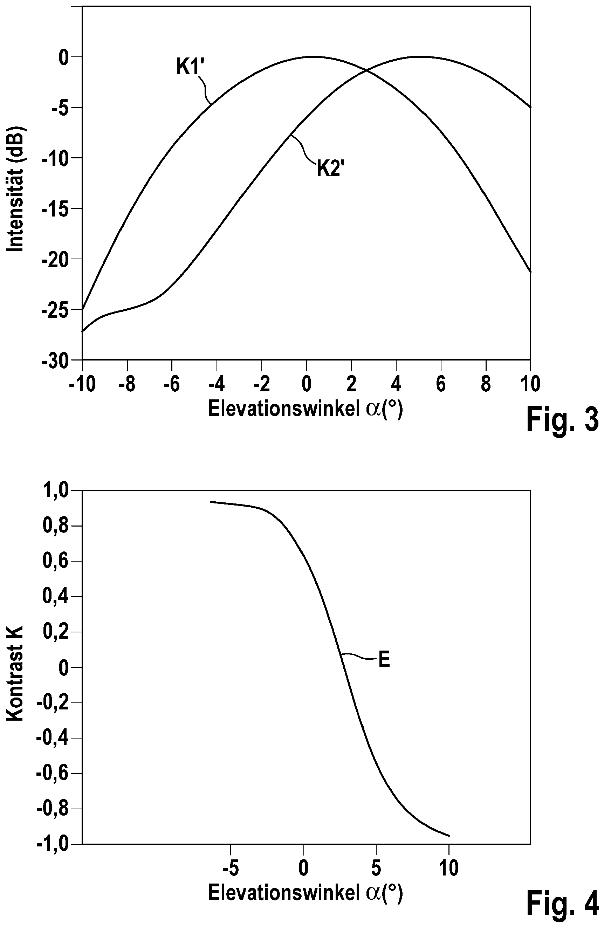

In Fig. 2 wird angenommen, dass der Radarsensor RS so in ein Fahrzeug eingebaut ist, dass das Substrat, auf dem sich die Antennenelemente 10, 12, 14 befinden, vertikal orientiert ist. Die Hauptabstrahlrichtung der Radarkeule K1, die von der Gruppe Tx1 erzeugt wird, ist dann waagerecht (entsprechend dem Elevationswinkel α = 0). In Fig. 3 zeigt die Kurve K1' die entsprechende Winkelverteilung der Intensität der Radarkeule K1. Man erkennt, dass das Maximum bei dem Elevationswinkel 0° liegt.

Die Gruppe Tx2 erzeugt dagegen aufgrund der Phasenverschiebung zwischen den Antennenelementen 14 jeder Spalte die Radarkeule K2, deren Hauptabstrahlrichtung um einen bestimmten Winkel aufwärts geneigt ist. Die entsprechende Winkelverteilung der Intensität ist durch die Kurve K2' in Fig. 3 angegeben. Man erkennt, dass das Maximum hier bei einem Elevationswinkel von 5° liegt.

In dem in Fig. 2 gezeigten Beispiel befindet sich das Objekt 22 bei einem Elevationswinkel α von etwa 4°. Die Folge ist, dass man in den Perioden, in denen die Gruppe Tx2 aktiv ist, ein relativ starkes Radarecho erhält, da sich das Objekt 22 etwa in der Mitte der Radarkeule K2 befindet, während man in Perioden, in denen die Gruppe Tx1 aktiv ist, ein deutlich schwächeres Signal erhält, da sich das Objekt 22 eher am Rand der entsprechenden Radarkeule K1 befindet. Der nach der oben angegebenen Formel berechnete Kontrast K ist deshalb in diesem Beispiel negativ.

Anhand der in Fig. 3 gezeigten Elevationsdiagramme lässt sich für jeden Elevationswinkel ein zugehöriger Wert des Kontrastes K berechnen. Der Zusammenhang zwischen dem Kontrast K und dem Elevationswinkel $\alpha$ wird in Fig. 4 durch die Kurve E angegeben. Anhand dieser Kurve kann dann in der Elevationswinkel-Schätzeinheit 32 der Elevationswinkel $\alpha$ des georteten Objektes bestimmt werden.

In Fig. 1 sind die Kontrast-Berechnungseinheit 30 und die Elevationswinkel-Schätzeinheit 32 als getrennte Einheiten dargestellt. In der Praxis werden diese Einheiten jedoch zumeist durch Softwaremodule eines elektronischen Datenverarbeitungssystems gebildet das auch die Funktionen der Auswerteeinrichtung 26 und der Steuereinrichtung 28 übernimmt.

## Patentansprüche

1. Radarsensor für Kraftfahrzeuge, mit einer Antennenanordnung (Rx, Tx1, Tx2), die mehrere Gruppen (Tx1, Tx2) von Antennenelementen (12, 14) aufweist, die sich in ihrer Wirkrichtung in Elevation unterscheiden und deren Hauptstrahlrichtungen in der Elevation um einen bestimmten Winkel zueinander verschwenkt sind, und die Antennenanordnung durch eine Steuereinrichtung (28) derart ansteuerbar ist, dass sie eine zeitlich variierende Richtcharakteristik aufweist, wobei die Steuereinrichtung (28) dazu ausgebildet ist, die Gruppen (Tx1, Tx2) zu aktivieren und zu deaktivieren, und mit einer Auswerteeinrichtung (26) zur Auswertung der von der Antennenanordnung empfangenen Radarechos und zur winkelauflösenden Ortung von Objekten (22), welche Auswerteeinrichtung (26) dazu ausgebildet ist, den Elevationswinkel ($\alpha$) der Objekte (22) anhand der von den verschiedenen Gruppen (Tx1, Tx2) empfangenen Radarechos abzuschätzen, **dadurch gekennzeichnet, dass** die Steuereinrichtung (28) dazu ausgebildet ist, zwei Gruppen von Antennenelementen (Tx1, Tx2) im periodischen Wechsel zu aktivieren und zu deaktivieren, und dass die Auswerteeinrichtung (26) dazu ausgebildet ist, für jedes geortete Objekt einen Leistungsparameter (P) zu berechnen, der ein Maß für die Stärke des empfangenen Radarechos bildet, dass eine zu der Auswerteeinrichtung (26) gehörende Kontrast-Berechnungseinheit (30) dazu vorgesehen ist, aus der Leistung P1, die während einer Periode empfangen wird, in der das Radarsignal von einer Gruppe (Tx1) der Antennenelemente (12) gesendet wird, und der Leistung P2, die während einer Periode empfangen wird, in der das Radarsignal von der anderen Gruppe (Tx2) der Antennenelemente (14) gesendet wird, einen Kontrast K nach der Formel $K = (P1 - P2) / (P1 + P2)$ zu berechnen, und eine Elevationswinkel-Schätzeinheit (32) dazu ausgebildet ist, den Elevationswinkel ($\alpha$) des Objektes (22) anhand des Kontrastes (K) zu bestimmen.

2. Radarsensor nach Anspruch 1, bei dem jede Gruppe (Tx1, Tx2) der Antennenelemente (12, 14) mindestens eine vertikal orientierte Spalte aus mehreren seriell gespeisten Antennenelementen (12, 14) aufweist.

3. Antennenanordnung nach Anspruch 1 oder 2, bei der die mindestens zwei Gruppen (Tx1, Tx2) der Antennenelemente (12, 14) als Sendeantennen konfiguriert sind und mindestens eine weitere Gruppe (Rx) von Antennenelementen (10) als Empfangsantenne konfiguriert ist.

4. Radarsensor nach den Ansprüchen 2 und 3, bei der jede der als Sendeantenne konfigurierten Gruppen (Tx1, Tx2) von Antennenelementen (12, 14) ein statisches Speisenetzwerk (18, 20) zur Einspeisung des zu sendenden Radarsignals in die Antennenelemente (12, 14) aufweist.

5. Radarsensor nach Anspruch 4, bei der die Speisenetzwerke (18, 20) mit einem gemeinsamen Oszillator (16) verbunden sind und die Steuereinrichtung (28) dazu ausgebildet ist, das Signal des Oszillators (16) abwechselnd auf die beiden Speisenetzwerke (18, 20) zu schalten.

## Claims

1. Radar sensor for motor vehicles, having an antenna arrangement (Rx, Tx1, Tx2) that has multiple groups (Tx1, Tx2) of antenna elements (12, 14), the active directions of which differ in elevation and the main radiation directions of which are swivelled through a particular angle relative to one another in elevation, and the antenna arrangement is actuatable by a control device (28) such that it has a directional characteristic that varies over time, wherein the control device (28) is designed to activate and deactivate the groups (Tx1, Tx2), and having an evaluation device (26) for evaluating the radar echoes received from the antenna arrangement and for locating objects (22) in an angle-resolving manner, which evaluation device (26) is designed to estimate the angle of elevation ($\alpha$) of the objects (22) on the basis of the radar echoes received from the various groups (Tx1, Tx2), **characterized in that** the control device (28) is designed to activate and deactivate two groups of antenna elements (Tx1, Tx2) in periodic alternation, and **in that** the evaluation device (26) is designed to compute for each located object a power parameter (P) that forms a measure of the strength of the received radar echo, **in that** a contrast computation unit (30) associated with the evaluation device (26) is provided for the purpose of computing from the power P1, which is received during a period in which the radar signal is sent by one group (Tx1) of the antenna elements (12), and the power P2, which is received during a period in which the radar signal is sent by the other group (Tx2) of the antenna elements (14), a contrast K according to the formula K = (P1 - P2)/(P1 + P2), and an angle-of-elevation estimation unit (32) is designed to determine the angle of elevation ($\alpha$) of the object (22) on the basis of the contrast (K).

2. Radar sensor according to Claim 1, in which each group (Tx1, Tx2) of the antenna elements (12, 14) has at least one vertically oriented column of multiple series-fed antenna elements (12, 14).

3. Antenna arrangement according to Claim 1 or 2, in which the at least two groups (Tx1, Tx2) of the antenna elements (12, 14) are configured as transmission antennas and at least one further group (Rx) of antenna elements (10) is configured as a reception antenna.

4. Radar sensor according to Claims 2 and 3, in which each of the groups (Tx1, Tx2) of antenna elements (12, 14) configured as a transmission antenna has a static feed network (18, 20) for feeding the radar signal to be sent into the antenna elements (12, 14).

5. Radar sensor according to Claim 4, in which the feed networks (18, 20) are connected to a common oscillator (16) and the control device (28) is designed to connect the signal from the oscillator (16) alternately to the two feed networks (18, 20).

**Revendications**

1. Capteur radar pour véhicules automobiles, comportant un système d'antenne (Rx, Tx1, Tx2) comportant plusieurs groupes (Tx1, Tx2) d'éléments d'antenne (12, 14) qui diffèrent les unes des autres en élévation par leur direction d'action et dont les directions de rayonnement principales sont amenées à pivoter les unes par rapport aux autres d'un angle déterminé en élévation, et dans lequel le système d'antenne peut être commandé par un dispositif de commande (28) de manière à ce qu'il présente une caractéristique d'orientation variant dans le temps, dans lequel le dispositif de commande (28) est conçu pour activer et pour désactiver les groupes (Tx1, Tx2), et comportant un dispositif d'évaluation (26) pour évaluer les échos radar reçus par le système d'antenne et pour résoudre angulairement la position d'objets (22), lequel dispositif d'évaluation (26) est conçu pour estimer l'angle d'élévation ($\alpha$) des objets (22) sur la base des échos radar reçus par les différents groupes (Tx1, Tx2), **caractérisé en ce que** le dispositif de commande (28) est conçu pour activer et pour désactiver selon une alternance périodique deux groupes d'éléments d'antenne (Tx1, Tx2), et **en ce que** le dispositif d'évaluation (26) est conçu pour calculer, pour chaque objet localisé, un paramètre de puissance (P) qui constitue une mesure de l'intensité de l'écho radar reçu, **en ce qu'**il est prévu une unité de calcul de contraste (30) appartenant au dispositif d'évaluation (26), à partir de laquelle la puissance P1 qui est reçue pendant une période au cours de laquelle le signal radar est émis par un groupe (Tx1) des éléments d'antenne (12) et la puissance P2 qui est reçue pendant une période au cours de laquelle le signal radar est émis par l'autre groupe (Tx2) des éléments d'antenne (14), pour calculer un contraste K conformément à la formule K = (P1-P2)/(P1+P2), et une unité d'estimation d'angle d'élévation (32) est conçue pour déterminer l'angle d'élévation ($\alpha$) de l'objet (22) sur la base du contraste (K).

2. Capteur radar selon la revendication 1, dans lequel chaque groupe (Tx1, Tx2) des éléments d'antenne (12, 14) comporte au moins une colonne orientée verticalement de plusieurs éléments d'antenne (12, 14) alimentés en série.

3. Système d'antenne selon la revendication 1 ou 2, dans lequel les au moins deux groupes (Tx1, Tx2) des éléments d'antenne (12, 14) sont configurés sous la forme d'antennes d'émission et au moins un autre groupe (Rx) d'éléments d'antenne (10) est configuré en tant qu'antenne de réception.

4. Capteur radar selon les revendications 2 et 3, dans lequel chacun des groupes (Tx1, Tx2) d'éléments d'antenne (12, 14) configurés en tant qu'antenne d'émission comporte un réseau d'alimentation statique (18, 20) destiné à injecter le signal radar à émettre dans les éléments d'antenne (12, 14).

5. Capteur radar selon la revendication 4, dans lequel le réseau d'alimentation (18, 20) est connecté à un oscillateur commun (16) et le dispositif de commande (28) est conçu pour commuter en alternance le signal de l'oscillateur (16) sur les deux réseaux d'alimentation (18, 20).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10256524 A1
- EP 1306925 A2
- JP 2008151583 A
- US RE36095 E
- DE 10340835 A1

**In der Beschreibung aufgeführte Nicht-Patentliteratur**

- Adaptive Fahrgeschwindigkeitsregelung ACC. Robert Bosch GmbH, 2002